# EUROPEAN PATENT APPLICATION

(11) **EP 4 765 324 A1**
(43) Date of publication of application: **24.06.2026**
(21) Application number: 25797851.0
(22) Date of filing: 21.02.2025
(51) Int. Cl.: H01M 10/48, H01M 10/42, H01M 10/46

(54) **BATTERY MANAGEMENT DEVICE, BATTERY MANAGEMENT METHOD, AND BATTERY MANAGEMENT SYSTEM**

(30) Priority: 02.05.2024 KR 20240058768
(71) Applicant: LG Energy Solution, Ltd., Seoul 07335 (KR)
(72) Inventor: CHOI, Yean Sik, Daejeon 34122 (KR)
(74) Representative: Plasseraud IP
(86) International application number: PCT/KR2025/002457
(87) International publication number: WO 2025/230105

(57) **Abstract**

According to some embodiments, a battery management device includes a data acquisition unit configured to acquire battery data from a multi-pack battery including a main battery pack and one or more sub-battery packs and a control unit configured to determine whether a low-temperature pack in a low-temperature state exists among packs of the multi-pack battery based on the battery data, select a discharge pack from among the remaining packs of the multi-pack battery, excluding the low-temperature pack, based on the battery data when the low-temperature pack exists, and supply power by discharge of the discharge pack to a temperature management device configured to manage a temperature of the low-temperature pack.

## Description

### TECHNICAL FIELD

### Cross-reference to Related Applications

This application claims priority from Korean Patent Application No. 10-2024-0058768, filed on May 2, 2024, the disclosure of which is incorporated by reference herein.

### Technical Field

Embodiments disclosed in this document relate to a battery management device, a battery management method, and a battery management system.

### BACKGROUND ART

Recently, research and development on secondary batteries have been actively conducted. Here, secondary batteries are batteries that can be charged and discharged, and may be interpreted including both conventional Ni/Cd batteries, Ni/MH batteries, and recent lithium ion batteries. Among secondary batteries, lithium ion batteries may have much higher energy density than conventional Ni/Cd batteries, Ni/MH batteries, etc. and may be manufactured to be small and lightweight, and thus lithium ion batteries may have high usability as a power source for mobile devices. Recently, the scope of use of the lithium ion batteries has expanded to include a power source for electric vehicles, and the lithium ion batteries are attracting attention as a next-generation energy storage medium.

A structure of a multi-pack battery that includes one traction battery pack and one or more extender battery packs may be utilized to provide power for an electric vehicle. In the structure of the multi-pack battery, problems such as long-term non-use or temperature decrease may occur in some of two or more battery packs, which may reduce the lifespan or performance of the entire multi-pack.

### DISCLOSURE OF THE INVENTION

### TECHNICAL PROBLEM

Embodiments disclosed in this document may provide a battery management device, a battery management method, and a battery management system that can solve problems caused by long-term non-use or temperature decrease that occurs in some of battery packs in a structure of a multi-pack battery.

The technical objectives of the embodiments disclosed in this document are not limited to the technical problems mentioned above, and other technical problems not mentioned can be clearly understood by those skilled in the art from the descriptions below.

### TECHNICAL SOLUTION

According to some embodiments, a battery management device includes a data acquisition unit configured to acquire battery data from a multi-pack battery including a main battery pack and one or more sub-battery packs and a control unit configured to determine whether a low-temperature pack in a low-temperature state exists among packs of the multi-pack battery based on the battery data, select a discharge pack from among the remaining packs of the multi-pack battery, excluding the low-temperature pack, based on the battery data when the low-temperature pack exists, and supply power by discharge of the discharge pack to a temperature management device configured to manage a temperature of the low-temperature pack.

According to some embodiments, the control unit is configured to compare first energy expected to be reduced due to an increase in performance caused by a temperature increase of the low-temperature pack and second energy expected to be consumed to increase a temperature of the low-temperature pack, supply the power by discharge of the discharge pack to the temperature management device based on a comparison result of the first energy and the second energy.

According to some embodiments, the control unit is configured to calculate a first evaluation score regarding a reduction of the first energy and a second evaluation score regarding an increase in battery life due to the consumption of the second energy, when the first energy is greater than the second energy and supply the power by the discharge of the discharge pack to the temperature management device based on the first evaluation score and the second evaluation score.

According to some embodiments, the control unit is configured to provide a user terminal with an inquiry message regarding whether to perform temperature management of the low-temperature pack when the first energy is greater than the second energy and supply the power by the discharge of the discharge pack based on a response message of the user to the inquiry message.

According to some embodiments, the control unit is configured to select a battery charger as the discharge pack when the battery charger is connected to the multi-pack battery and return an amount of power equal to an amount of power, which is supplied from the battery charger to the temperature management device, from the low-temperature pack to the battery charger to manage the temperature of the low-temperature pack.

According to some embodiments, the control unit is configured to provide a message suggesting that at least some of the packs of the multi-pack battery be determined as the low-temperature pack in advance to a user terminal based on at least one of temperature data of the multi-pack battery measured periodically, expected temperature data based on the weather forecast, and frequency distribution data regarding frequency of battery usage by a user by time zone.

According to some embodiments, the control unit is configured to select the discharge pack based on a state of charge (SOC), state of health (SOH), and discharge current (C-rate) of each of the remaining packs.

According to some embodiments, a battery management method includes acquiring battery data from a multi-pack battery including a main battery pack and one or more sub-battery packs, determining whether a low-temperature pack in a low-temperature state exists among packs of the multi-pack battery based on the battery data, selecting a discharge pack from among the remaining packs of the multi-pack battery, excluding the low-temperature pack, based on the battery data when the low-temperature pack exists, and supplying power by discharge of the discharge pack to a temperature management device configured to manage a temperature of the low-temperature pack.

According to some embodiments, the supplying of the power by discharge of the discharge pack includes comparing first energy expected to be reduced due to an increase in performance caused by a temperature increase of the low-temperature pack and second energy expected to be consumed to increase a temperature of the low-temperature pack and supplying the power by discharge of the discharge pack to the temperature management device based on a comparison result of the first energy and the second energy.

According to some embodiments, the supplying of the power by discharge of the discharge pack includes calculating a first evaluation score regarding a reduction of the first energy and a second evaluation score regarding an increase in battery life due to the consumption of the second energy, when the first energy is greater than the second energy, and supplying the power by the discharge of the discharge pack to the temperature management device based on the first evaluation score and the second evaluation score.

According to some embodiments, the supplying of the power by discharge of the discharge pack includes providing a user terminal with an inquiry message regarding whether to perform temperature management of the low-temperature pack when the first energy is greater than the second energy and supplying the power by the discharge of the discharge pack based on a response message of the user to the inquiry message.

According to some embodiments, the battery management method further includes selecting a battery charger as the discharge pack when the battery charger is connected to the multi-pack battery and returning an amount of power equal to an amount of power, which is supplied from the battery charger to the temperature management device, from the low-temperature pack to the battery charger to manage the temperature of the low-temperature pack.

According to some embodiments, the selecting of the discharge pack includes providing a message suggesting that at least some of the packs of the multi-pack battery be determined as the low-temperature pack in advance to a user terminal based on at least one of temperature data of the multi-pack battery measured periodically, expected temperature data based on the weather forecast, and frequency distribution data regarding frequency of battery usage by a user by time zone.

According to some embodiments, the selecting of the discharge pack includes selecting the discharge pack based on a state of charge (SOC), state of health (SOH), and discharge current (C-rate) of each of the remaining packs.

According to some embodiments, a battery management system includes a multi-pack battery that includes a main battery pack and one or more sub-battery packs, a temperature management device configured to manage a temperature of the multi-pack battery, and a battery management device configured to acquire battery data from the multi-pack battery, determine whether a low-temperature pack in a low-temperature state exists among packs of the multi-pack battery based on the battery data, select a discharge pack from the remaining packs of the multi-pack battery excluding the low-temperature pack based on the battery data when the low-temperature pack exists, and supply power by discharging the discharge pack to the temperature management device.

### ADVANTAGEOUS EFFECTS

According to the embodiments disclosed in this document, a battery management device, a battery management method, and a battery management system that can solve problems caused by long-term non-use or temperature decrease in some of the battery packs in the structure of the multi-pack battery can be provided.

Technical effects according to the embodiments disclosed in this document are not limited to the effects mentioned above, and other effects not mentioned will be clearly understood by those skilled in the art according to the disclosure of this document.

### BRIEF DESCRIPTION OF THE DRAWINGS

FIG. 1 illustrates components constituting a battery management system according to some embodiments.
FIG. 2 illustrates components constituting a battery management device according to some embodiments.
FIG. 3 illustrates a structure of a multi-pack battery according to some embodiments.
FIG. 4 illustrates a process for determining whether a low-temperature pack exists among packs of a multi-pack battery according to some embodiments.
FIG. 5 illustrates a method for managing the temperature of a low-temperature pack according to some embodiments.
FIG. 6 illustrates steps constituting a battery management method according to some embodiments.

### MODE FOR CARRYING OUT THE INVENTION

Hereinafter, embodiments described in this document are described with reference to the accompanying drawings. However, this is not intended to limit the disclosure of this document to a specific embodiment, but should be understood to include various modifications, equivalents, and/or alternatives of the embodiments described in this document.

Embodiments of this document and the terms used therein are not intended to limit the technical features described in this document to a specific embodiment, but should be understood to include various modifications, equivalents, or alternatives of the embodiment. In connection with the description of the drawings, similar reference numerals may be used for similar or related components. The singular form of a noun corresponding to an item may include one or more of said items, unless the context clearly indicates otherwise.

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", "firstly", "secondly", "A", "B", "(a)", or "(b)" may be used merely to distinguish one component from another, and do not limit the components in any other respect (e.g., importance or order) unless specifically stated otherwise.

In this document, when a component (e.g., a first component) is referred to as being "connected", "coupled" or "joined" to another component (e.g., a second component), with or without the terms "functionally" or "communicatively", it means that the component can be connected to the other component directly (e.g., in a wired manner or wirelessly), or indirectly (through a third component).

The method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to the embodiments disclosed in this document, each of the components (e.g., modules or programs) described above may include a single or plurality of entities, and some of the plurality of entities may be separated and placed in other components. According to the embodiments disclosed in this document, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to the embodiments disclosed in this document, the operations performed by a module, program, or other component may be performed sequentially, in parallel, repeatedly, or heuristically, or one or more of the operations may be performed in a different order, omitted, or performed by being added with one or more other operations.

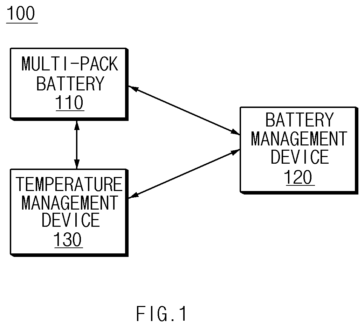

FIG. 1 illustrates components that constitute a battery management system according to some embodiments.

Referring to FIG. 1, a battery management system 100 may include a multi-pack battery 110, a battery management device 120, and a temperature management device 130. However, the present invention is not limited thereto, and some components may be omitted from the battery management system 100, or other general-purpose configurations may be further included in the battery management system 100.

The multi-pack battery 110 may include a plurality of battery packs. The multi-pack battery 110 may include a main battery pack and one or more sub-battery packs. The main battery pack may be a traction battery pack, and the sub-battery pack may be an extender battery pack. The multi-pack battery 110 may be used by a power-using apparatus. The power-using apparatus may include a mobility apparatus such as an electric vehicle (EV), a hybrid electric vehicle (HEV), or an electric bike.

The battery management device 120 can manage a state of the multi-pack battery 110. Some of packs of the multi-pack battery 110 may experience temperature fluctuations or long-term non-use, which may result in degradation of the pack lifespan or pack performance. To prevent this, the battery management device 120 may acquire battery data from the multi-pack battery 110 and perform various management functions based on the acquired battery data.

The temperature management device 130 may manage the temperature of the multi-pack battery 110. For example, the temperature management device 130 may include a heater device for increasing the temperature of a low-temperature pack of the multi-pack battery 110. The temperature management device 130 may receive power from a normal pack among the multi-pack battery 110 or an external battery charger, and may manage the temperature of the low-temperature pack based on this. Alternatively, the temperature management device 130 may include a cooling device for cooling the multi-pack battery 110.

The battery pack may have a problem in that performance is degraded in a low temperature state. When the battery pack is left unused for a long time, the performance of the battery pack may degrade and the lifespan thereof may decrease. When only a single battery pack is used, management may be performed internally within the battery pack to resolve the performance degradation. On the other hand, since the multi-pack battery 110 operates two or more battery packs together, it may be possible to cope with performance degradation more flexibly. For example, the battery management system 100 may prevent performance degradation of the low-temperature pack by using power from the normal pack.

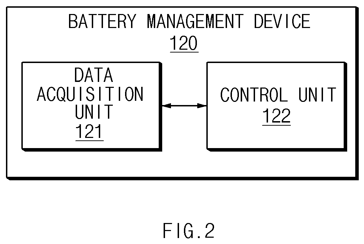

FIG. 2 illustrates components that constitute a battery management device according to some embodiments.

Referring to FIG. 2, the battery management device 120 may include a data acquisition unit 121 and a control unit 122. However, the present invention is not limited thereto, and some configurations may be omitted from the battery management device 120, or other general-purpose configurations may be further included in the battery management device 120.

The data acquisition unit 121 may include a sensor unit and/or a communication unit. The sensor unit may directly measure battery data from the multi-pack battery 110, and the communication unit may receive battery data of the multi-pack battery 110 measured externally from the battery management device 120. For example, when the battery management device 120 is configured together with the multi-pack battery 110 in the form of an on-board BMS, the data acquisition unit 121 may include a sensor unit. Alternatively, when the battery management device 120 is an external device remotely placed in an off-board form of the multi-pack battery 110, the data acquisition unit 121 may include a communication unit. The external device may include a battery charger, a battery management server, etc. According to the embodiment, the battery management server may be implemented in a cloud computing environment.

The control unit 122 may include a memory and/or a processor. The processor may be implemented in the form of at least one of a logic gate array, a microprocessor, a CPU, a GPU, and an AP. The memory may be implemented as a nonvolatile device such as a ROM, a PROM, an EPROM, an EEPROM, a flash memory, a PRAM, a MRAM, a RRAM, a FRAM, etc., or a volatile device such as a DRAM, SRAM, SDRAM, PRAM, etc., and may be implemented in the form of an HDD, an SSD, an SD, a Micro-SD, etc., or a combination thereof.

The data acquisition unit 121 may be configured to acquire battery data from the multi-pack battery 110 including a main battery pack and one or more sub-battery packs. For example, the data acquisition unit 121 may measure battery data directly from the multi-pack battery 110 through the sensor unit, or may receive battery data of the multi-pack battery 110 through the communication unit.

The control unit 122 may be configured to determine whether a low-temperature pack in a low-temperature state exists among the packs of the multi-pack battery 110 based on the battery data. The battery data may include time series data on voltage, current, temperature, resistance, etc. of the packs of the multi-pack battery 110 measured at regular intervals. Based on time series data, the low temperature pack at a current time point may be determined, and the low temperature pack at a future time point may be predicted.

The control unit 122 may be configured to select a discharge pack from the remaining packs of the multi-pack battery 110 excluding the low-temperature pack based on battery data when the low-temperature pack exists. In order to increase the temperature of the low-temperature pack to a normal range using the temperature management device 130, power supply to the temperature management device 130 may be required. In order to prepare power to be supplied to the temperature management device 130, a discharge pack may be selected from the remaining packs excluding the low-temperature pack based on the time series battery data.

The control unit 122 may be configured to supply power by discharge of the discharge pack to the temperature management device 130 configured to manage the temperature of the low-temperature pack. The control unit 122 may control switching of the discharge pack and the temperature management device 130 to provide power of the discharge pack to the temperature management device 130. The temperature management device 130 may perform a heating function to increase the temperature of the low-temperature pack.

According to the embodiment, the control unit 122 may be configured to compare first energy expected to be reduced due to the performance increase caused by the temperature increase of the low-temperature pack and second energy expected to be consumed to increase the temperature of the low-temperature pack and supply power by the discharge of the discharge pack to the temperature management device 130 based on the comparison result of the first energy and the second energy. When the temperature of the battery pack decreases, the output of the battery pack may be reduced. Therefore, when the temperature of the low-temperature pack increases through temperature management, the output of the battery pack may increase again. A mapping relationship between temperature and performance may be established in advance, and the first energy may be calculated using this. In order to acquire the first energy, the second energy consumed in the process of transferring the power of the discharge pack to the low-temperature pack using the temperature management device 130 may be required. By comparing the first energy and the second energy, when the second energy is greater than a certain ratio of the first energy, a heating function may be performed to increase the temperature of the low-temperature pack. For example, the certain ratio may be set to 0.7, 0.8, 0.9, or any other appropriate value by compromising the performance and energy efficiency of the multi-pack battery 110.

According to an embodiment, the control unit 122 may be configured to calculate a first evaluation score regarding the reduction of the first energy and a second evaluation score regarding the increase in battery life due to the consumption of the second energy when the first energy is greater than the second energy and supply the power by discharge of the discharge pack to the temperature management device 130 based on the first evaluation score and the second evaluation score. In the case of comparison between the first energy and the second energy, a certain ratio such as 0.7, 0.8, or 0.9 as mentioned above may be applied. When comparing the first energy and the second energy, even if it may be disadvantageous to perform temperature management for the low-temperature pack from an energy perspective, temperature management may be necessary from the perspective of battery life. To determine this, the first evaluation score and the second evaluation score may be calculated through a mapping table prepared in advance, etc. When the second evaluation score is greater than the first evaluation score, it may be determined that it is more advantageous to perform temperature management from the perspective of battery life, and temperature management for the low-temperature pack may be performed through the discharge of the discharge pack.

According to the embodiment, the control unit 122 may be configured to provide a user terminal with an inquiry message regarding whether to perform temperature management for the low-temperature pack when the first energy is greater than the second energy and supply the power by discharge of the discharge pack based on a response message of a user to the inquiry message. Even if it is disadvantageous to perform temperature management for the low-temperature pack from the perspective of not only energy efficiency but also battery life, a situation may arise where it is necessary to perform temperature management based on the user's determination. To this end, an inquiry message may be transmitted to a user terminal such as a pre-registered mobile device or PC.

According to the embodiment, the control unit 122 may be configured to select a battery charger as the discharge pack when the battery charger is connected to the multi-pack battery 110, and return an amount of power equal to the amount of power, which is supplied from the battery charger to the temperature management device 130, from the low-temperature pack to the battery charger in order to manage the temperature of the low-temperature pack. When the battery charger is connected, instead of selecting the discharge pack within the multi-pack battery 110, the battery charger may be used as a power source. In this case, an equal amount of power may be returned to the battery charger to compensate for the power provided by the battery charger. The power returned to the battery charger may be provided by the low-temperature pack.

According to an embodiment, the control unit 122 may be configured to provide a message suggesting that at least some of the packs of the multi-pack battery 110 be determined as low-temperature packs in advance to the user terminal based on at least one of temperature data of the multi-pack battery 110 measured periodically, expected temperature data based on weather forecast, and frequency distribution data regarding the frequency of battery usage by the user by time zone. From periodic temperature data, trends in battery temperature may be estimated, and based on this, it may be predicted that a particular pack will be in a low temperature state at a future point in time. In addition, fluctuations in the external temperature of the battery may be predicted based on weather forecast. Meanwhile, it may be predicted at what time zone the battery will be used according to the frequency distribution data. By synthesizing these predictions, a specific battery pack may be determined as a low temperature pack in advance at a future point in time, and a suggestion message for the user's confirmation may be transmitted to the user terminal.

According to the embodiment, the control unit 122 may be configured to select the discharge pack based on a state of charge (SOC), state of health (SOH) and discharge current (C-rate) of each of the remaining packs. In order to maintain the overall life and performance of the multi-pack battery 110 equally between the packs, the SOC, SOH, and C-rate values of each pack may be utilized in selecting a discharge pack. For example, the pack having the best SOC, SOH, and/or C-rate may be selected as the discharge pack.

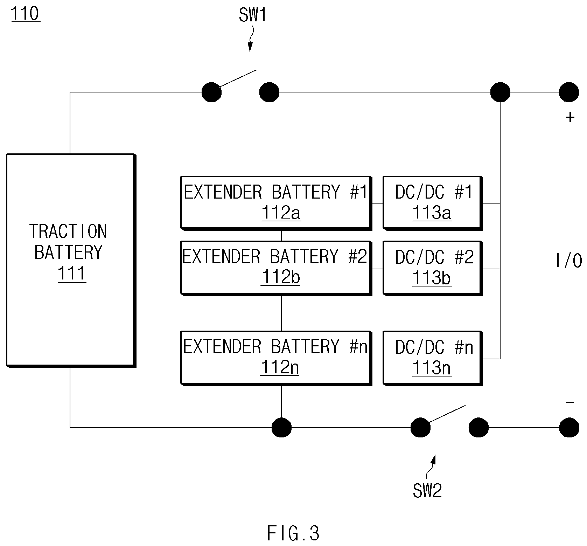

FIG. 3 illustrates a structure of a multi-pack battery according to some embodiments.

Referring to FIG. 3, the multi-pack battery 110 may include a traction battery 111 and one or more extender batteries 112a to 112n. One or more DC-DC converters 113a to 113n may be connected to one or more extender batteries 112a to 112n. The traction battery 111 may correspond to the main battery pack, and one or more extender batteries 112a to 112n may correspond to one or more sub-battery packs.

The control unit of the battery management device 120 and/or the multi-pack battery 110 may control a first switch SW1 and a second switch SW2, etc. to select a battery pack connected to an input/output port I/O. For example, when the second extended battery 112b is selected as a discharge pack, a first switch SW1 and/or a second switch SW2 may be opened, and discharge power of the second extended battery 112b may be provided to the temperature management device 130 through a second DC-DC converter 113b.

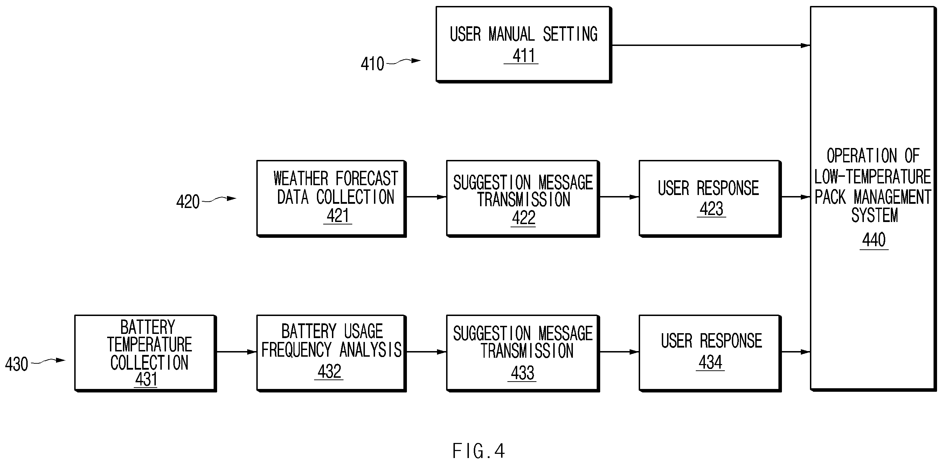

FIG. 4 illustrates a process for determining whether a low-temperature pack exists among packs of a multi-pack battery according to some embodiments.

Referring to FIG. 4, when it is determined that the low-temperature pack exists among packs of the multi-pack battery 110, an operation 440 of the low-temperature pack management system may be performed, and the operation 440 of the low-temperature pack management system may be performed by any one of a first method 410, a second method 420, and a third method 430.

In the first method 410, the user of the multi-pack battery 110 or a mobility apparatus including the same may manually set the operation of the management system through user manual setting 411. When the manual setting input is received, the battery management system 100 may determine whether the low-temperature pack exists and may perform heating for the low-temperature pack by transmitting power of the discharge pack to the temperature management device 130. Alternatively, even if it is determined that the low-temperature pack does not exist, the user can manually set at least some of the packs of the multi-pack battery 110 as low-temperature packs. The user may receive various messages from the battery management system 100 or transmit a command message to the battery management system 100 through wired/wireless data communication using the user terminal.

In the second method 420, weather or temperature information at a future point in time may be collected through weather forecast data collection 421. When it is expected that a specific battery pack will enter a low-temperature state at a future point in time based on periodically measured time series battery data and/or weather forecast data, a message suggesting that the battery pack be set as the low-temperature pack at the present point in time and/or future point in time may be transmitted to the user terminal through suggestion message transmission 422, and low-temperature pack management may be performed based on a user response 423 to the message.

In the third method 430, temperature trends may be analyzed from time series battery data through battery temperature collection 431, and it is possible to analyze at what time zone the user frequently uses the battery through battery usage frequency analysis 432. Based on these, a message suggesting that low-temperature pack management be performed at a specific time zone may be transmitted to the user terminal through suggestion message transmission 433, and low-temperature pack management may be performed based on the user response 434 to the message.

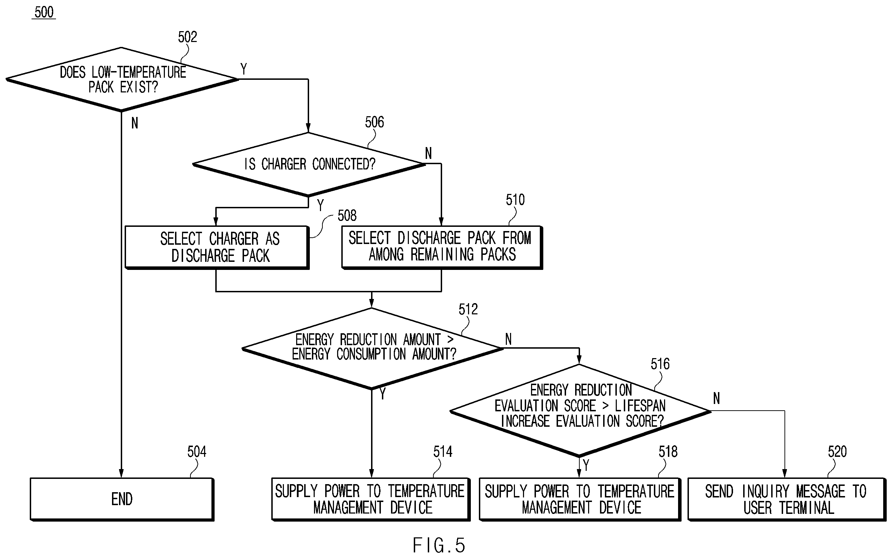

FIG. 5 illustrates a method for managing the temperature of a low-temperature pack according to some embodiments.

Referring to FIG. 5, a flow 500 illustrating a method for managing the temperature of the low-temperature pack may be illustrated.

In step 502, it may be determined whether a low-temperature pack exists. When the low-temperature pack does not exist, the flow 500 may end in step 504. When the low-temperature pack exists, it may be determined whether a battery charger is connected to the multi-pack battery 110 in step 506. When the battery charger is connected, the battery charger may serve as a discharge pack that supplies temperature management power in step 508. When the battery charger is not connected, the discharge pack may be selected from the remaining packs of the multi-pack battery 110 except for the low-temperature pack in step 510.

When either the battery charger or any of the remaining packs is selected as the discharge pack, an energy reduction amount due to temperature management (first energy) and an energy consumption amount (second energy) for temperature management may be compared with each other in step 512. The first energy and the second energy may be directly compared with each other, or a value obtained by multiplying the second energy by a certain ratio having a value between 0 and 1 may be compared with the first energy. When it is determined that the energy saving amount is higher, the power of the discharge pack may be transferred to the temperature management device 130 in step 514.

When it is determined that the energy consumption amount is higher, a first evaluation score for energy reduction and a second evaluation score for lifespan increase may be compared with each other in step 516. When the first evaluation score for energy reduction is higher, the power of the discharge pack may be transferred to the temperature management device 130 in step 518. When the second evaluation score regarding lifespan increase is higher, an inquiry message may be sent to the user terminal in step 520.

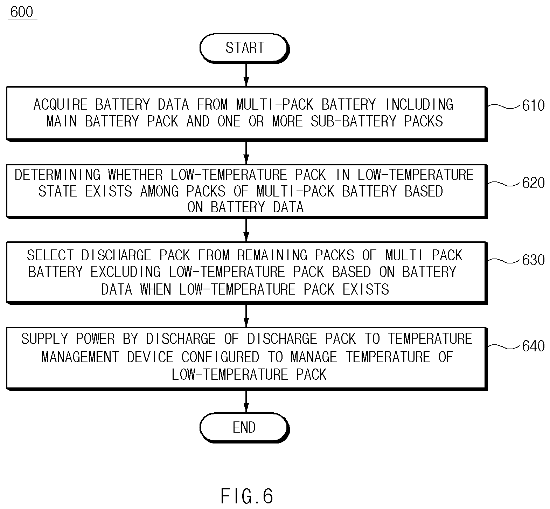

FIG. 6 illustrates steps constituting a battery management method according to some embodiments.

Referring to FIG. 6, a battery management method 600 may include steps 610 to 640. However, the present invention is not limited thereto, and some steps may be omitted or other general steps may be added, and the steps of the battery management method 600 may be executed in a different order from the illustrated order.

The battery management method 600 may be composed of steps that are processed in time series in the battery management device 120. Therefore, even if the content is omitted below, the content described above for the battery management device 120 may be equally applied to the battery management method 600.

The steps 610 to 640 of the battery management method 600 may be performed by the data acquisition unit 121 and the control unit 122 of the battery management device 120.

In step 610, the battery management device 120 may perform a step of acquiring battery data from a multi-pack battery including a main battery pack and one or more sub-battery packs.

In step 620, the battery management device 120 may perform a step of determining whether a low-temperature pack in a low-temperature state exists among the packs of the multi-pack battery based on the battery data.

In step 630, the battery management device 120 may perform a step of selecting a discharge pack from the remaining packs of the multi-pack battery excluding the low-temperature pack based on the battery data when the low-temperature pack exists.

In step 640, the battery management device 120 may perform a step of supplying power by discharge of the discharge pack to a temperature management device configured to manage the temperature of the low-temperature pack.

According to the embodiment, the battery management method 600 may be implemented in the form of a computer program stored in a computer-readable storage medium. That is, the computer program may include instructions for implementing the battery management method 600, and the instructions of the program may be stored in the computer-readable storage medium. The computer program may include a mobile application.

According to the embodiment, the computer-readable storage medium may include magnetic media such as hard disks, floppy disks, and magnetic tapes, optical media such as CD-ROMs, DVDs, magneto-optical media such as floptical disks, and hardware devices specifically configured to store and execute computer program instructions such as ROMs, RAMs, flash memory, etc. The computer program instructions may include machine language codes produced by a compiler and high-level language codes executable by a computer using an interpreter, etc.

The terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical idea disclosed in this document, and a person skilled in the art to which the embodiments disclosed in this document belong may make various modifications and variations thereto without departing from the essential characteristics of the embodiments disclosed in this document. Therefore, the embodiments disclosed in this document are not intended to limit the technical idea of the embodiments disclosed in this document, but rather to explain it, and the scope of the technical idea disclosed in this document is not limited by these embodiments. The scope of protection of the technical idea disclosed in this document should be interpreted by the claims below, and all technical ideas within the equivalent scope should be interpreted as being included in the scope of the rights of this document.

### [Description of symbols]

100: battery management system 110: multi-pack battery
120: battery management device 121: data acquisition unit
122: control unit 130: temperature management device

## Claims

1. A battery management device comprising:
a data acquisition unit configured to acquire battery data from a multi-pack battery including a main battery pack and one or more sub-battery packs; and
a control unit configured to determine whether a low-temperature pack in a low-temperature state exists among packs of the multi-pack battery based on the battery data, select a discharge from among the remaining packs of the multi-pack battery, excluding the low-temperature pack, based on the battery data when the low-temperature pack exists, and supply power by discharge of the discharge pack to a temperature management device configured to manage a temperature of the low-temperature pack.

2. The battery management device of claim 1, wherein the control unit is configured to:
compare first energy expected to be reduced due to an increase in performance caused by a temperature increase of the low-temperature pack and second energy expected to be consumed to increase a temperature of the low-temperature pack;
supply the power by discharge of the discharge pack to the temperature management device based on a comparison result of the first energy and the second energy.

3. The battery management device of claim 2, wherein the control unit is configured to:
calculate a first evaluation score regarding a reduction of the first energy and a second evaluation score regarding an increase in battery life due to the consumption of the second energy, when the first energy is greater than the second energy; and
supply the power by the discharge of the discharge pack to the temperature management device based on the first evaluation score and the second evaluation score.

4. The battery management device of claim 2, wherein the control unit is configured to:
provide a user terminal with an inquiry message regarding whether to perform temperature management of the low-temperature pack when the first energy is greater than the second energy; and
supply the power by the discharge of the discharge pack based on a response message of the user to the inquiry message.

5. The battery management device of claim 1, wherein the control unit is configured to:
select a battery charger as the discharge pack when the battery charger is connected to the multi-pack battery; and
return an amount of power equal to an amount of power, which is supplied from the battery charger to the temperature management device, from the low-temperature pack to the battery charger to manage the temperature of the low-temperature pack.

6. The battery management device of claim 1, wherein the control unit is configured to provide a message suggesting that at least some of the packs of the multi-pack battery be determined as the low-temperature pack in advance to a user terminal based on at least one of temperature data of the multi-pack battery measured periodically, expected temperature data based on the weather forecast, and frequency distribution data regarding frequency of battery usage by a user by time zone.

7. The battery management device of claim 1, wherein the control unit is configured to select the discharge pack based on a state of charge (SOC), state of health (SOH), and discharge current (C-rate) of each of the remaining packs.

8. A battery management method comprising:
acquiring battery data from a multi-pack battery including a main battery pack and one or more sub-battery packs;
determining whether a low-temperature pack in a low-temperature state exists among packs of the multi-pack battery based on the battery data;
selecting a discharge pack from among the remaining packs of the multi-pack battery, excluding the low-temperature pack, based on the battery data when the low-temperature pack exists; and
supplying power by discharge of the discharge pack to a temperature management device configured to manage a temperature of the low-temperature pack.

9. The battery management method of claim 8, wherein the supplying of the power by discharge of the discharge pack includes:
comparing first energy expected to be reduced due to an increase in performance caused by a temperature increase of the low-temperature pack and second energy expected to be consumed to increase a temperature of the low-temperature pack; and
supplying the power by discharge of the discharge pack to the temperature management device based on a comparison result of the first energy and the second energy.

10. The battery management method of claim 9, wherein the supplying of the power by discharge of the discharge pack includes:
calculating a first evaluation score regarding a reduction of the first energy and a second evaluation score regarding an increase in battery life due to the consumption of the second energy, when the first energy is greater than the second energy; and
supplying the power by the discharge of the discharge pack to the temperature management device based on the first evaluation score and the second evaluation score.

11. The battery management method of claim 9, wherein the supplying of the power by discharge of the discharge pack includes:
providing a user terminal with an inquiry message regarding whether to perform temperature management of the low-temperature pack when the first energy is greater than the second energy; and
supplying the power by the discharge of the discharge pack based on a response message of the user to the inquiry message.

12. The battery management method of claim 8, further comprising:
selecting a battery charger as the discharge pack when the battery charger is connected to the multi-pack battery; and
returning an amount of power equal to an amount of power, which is supplied from the battery charger to the temperature management device, from the low-temperature pack to the battery charger to manage the temperature of the low-temperature pack.

13. The battery management method of claim 8, wherein the selecting of the discharge pack includes providing a message suggesting that at least some of the packs of the multi-pack battery be determined as the low-temperature pack in advance to a user terminal based on at least one of temperature data of the multi-pack battery measured periodically, expected temperature data based on the weather forecast, and frequency distribution data regarding frequency of battery usage by a user by time zone.

14. The battery management method of claim 8, wherein the selecting of the discharge pack includes selecting the discharge pack based on a state of charge (SOC), state of health (SOH), and discharge current (C-rate) of each of the remaining packs.

15. A battery management system comprising:
a multi-pack battery that includes a main battery pack and one or more sub-battery packs;
a temperature management device configured to manage a temperature of the multi-pack battery; and
a battery management device configured to acquire battery data from the multi-pack battery determine whether a low-temperature pack in a low-temperature state exists among packs of the multi-pack battery based on the battery data, select a discharge pack from the remaining packs of the multi-pack battery excluding the low-temperature pack based on the battery data if the low-temperature pack exists, and supply power by discharge of the discharge pack to the temperature management device.
